# EUROPÄISCHE PATENTSCHRIFT

(11) **EP 0 570 836 B1**
(45) Veröffentlichungstag und Bekanntmachung des Hinweises auf die Patenterteilung: **22.01.1997**
(21) Anmeldenummer: 93107779.6
(22) Anmeldetag: 13.05.1993
(51) Int. Cl.: D01H 13/22, B65H 63/06, G01B 7/12

(54) **Verfahren und Vorrichtung zur online Erkennung von schlecht eingestellten oder defekten Streckwerken an Ringspinnmaschinen**
Method and apparatus for the on-line identification of badly set or defective drawframes on ring spinning machines
Procédé et dispositif pour l'identification en direct de bancs d'étirage mal ajustés ou défectueux de métiers à filer à anneaux

(30) Priorität: 20.05.1992 CH 1624/92
(43) Veröffentlichungstag der Anmeldung: 24.11.1993
(73) Patentinhaber: ZELLWEGER LUWA AG, CH-8610 Uster (CH)
(72) Erfinder: Aemmer, Peter Fritz, Dr., CH-8907 Wettswil (CH)
(74) Vertreter: Dittrich, Horst

(56) Entgegenhaltungen:
- DE-A- 2 409 882
- DE-A- 2 615 649
- DE-B- 1 535 079

## Beschreibung

Die Erfindung liegt auf dem Gebiet der Qualitätsüberwachung von Garnen und der sicheren und eindeutigen Zuordnung eines festgestellten Qualitätsmangels zu seiner Ursache. Letzteres ist gerade bei der heute üblichen sehr intensiven Qualitätsüberwachung oft schwierig, weil nämlich bei dieser Qualitätsmängel auftreten, die früher nicht als solche empfunden wurden.

Ein derartiger sich heute zunehmend störend bemerkbar machender Qualitätsmangel im Bereich der Ringspinnerei sind Verzugsstörungen im Garn, die durch aus Nachlässigkeit oder Unachtsamkeit des Bedienungspersonals schlecht eingestellte oder durch als Folge von Verschleiss nicht mehr optimal funktionierende Streckwerke verursacht sind. Spinncopse, die Garn mit solchen Verzugsstörungen enthalten, verursachen im Endprodukt, also im textilen Flächengebilde oder der Ware, bestimmte Fehler, die sich vom Rest der Ware abheben. Diese Fehler, die beispielsweise durch Streifen von unruhigem Aussehen gebildet sein können, wurden früher im weniger perfekten Warenbild meist stillschweigend toleriert und können heute, mit der im Gefolge des technischen Fortschritts und der Automatisierung zunehmenden Perfektionierung des textilen Herstellungsprozesses, zu Beanstandungen führen.

Bei der offline Untersuchung im Textillabor unterscheidet sich Garn mit derartigen Verzugsfehlern von vergleichbarem einwandfreiem Garn messtechnisch dadurch, dass der Variationskoeffizient der Masseschwankungen (CV%) um wenige Prozentpunkte höher liegt. Bei der ebenfalls offline erfolgenden Garnfehlerklassierung nach dem USTER CLASSIMAT Verfahren (USTER und USTER CLASSIMAT sind eingetragene Warenzeichen der Zellweger Uster AG) treten die sogenannten B1-Fehler, das sind die kurzen Dickstellen zwischen 1 und 2 cm für die Länge und zwischen +100% und +150% für die Querschnittszunahme, häufiger auf als bei einwandfreiem Garn derselben Qualität und Beschaffenheit.

Bei der online Garnüberwachung durch bekannte elektronische Garnreiniger sind auf Verzugsstörungen zurückzuführende Garnfehler wegen ihrer geringfügigen Masse- und Durchmesserschwankungen nur sehr schwer und jedenfalls nicht genügend zuverlässig zu erkennen.

Aus der DE-A-24 09 882 ist zwar ein Verfahren und eine Vorrichtung zum Erkennen des fehlerhaften Arbeitens von Spinnaggregaten an Rotorspinnmaschinen bekannt, mit dem insbesondere Störungen, die sich durch Verunreinigungen ergeben, erkannt werden können. Dies geschieht indem der Garnquerschnitt laufend gemessen und in ein elektrisches Signal gewandelt wird, das dann auf Besonderheiten untersucht wird. Allerdings sind diejenigen Fehler, die durch ein schlecht eingestelltes Streckwerk an einer Ringspinnmaschine zu erwarten sind wesentlich subtiler und schwieriger zu erfassen. Das bekannte Verfahren oder die bekannte Vorrichtung genügen dazu nicht.

Die Erfindung hat nun die Aufgabe, ein Verfahren anzugeben, mit welchem mittels einer online Ueberwachung des auf einer Ringspinnmaschine produzierten Garns, und zwar entweder auf der Ringspinnmaschine selbst oder auf der dieser nachgelagerten Spulmaschine, das Vorhandensein von Verzugsstörungen der genannten Art erkannt und signalisiert werden kann, so dass automatisch gezielte Rückschlüsse auf notwendige Korrektur-oder Reparaturmassnahmen ermöglicht werden.

Die vorliegende Erfindung betrifft somit ein Verfahren und eine Vorrichtung gemäß den Oberbegriffen der Ansprüche 1 und 6.

Das erfindungsgemässe Verfahren bzw. die zur Durchführung dieses Verfahrens vorgesehene Vorrichtung ist gekennzeichnet, durch die im Kennzeichen der Ansprüche 1 bzw. 6 genannten Lösungsmittel.

Die erfindungsgemässe Lösung der gestellten Aufgabe geht davon aus, dass sich das unruhige Erscheinungsbild von textilen Flächengebilden aus Ringspinngarn von Spinnpositionen mit schlecht eingestelltem Streckwerk oder nicht mehr ganz perfekten Streckriemchen dadurch erklären lässt, dass der Fluss des verstreckten Fasermaterials am Ausgang eines solchen nicht optimalen Streckwerks nicht, wie beabsichtigt, regelmässig und kontinuierlich verläuft, sondern durch häufige, in unregelmässigen Abständen auftretende schwache Verzugsstörungen beeinträchtigt ist. Diese Verzugsstörungen machen sich im Garn als in kurzen Abständen auftretende, schwach ausgeprägte kurze Dickstellen bemerkbar.

Für die Erkennung von solchen in kurzen Abständen auftretenden, schwach ausgeprägten, kurzen Dickstellen durch ein automatisches online Verfahren ist erschwerend, dass sich die Querschnittszunahme solcher Dickstellen nicht stark von den natürlichen Querschnittsschwankungen von ringgesponnenem Garn unterscheidet. Daher sind die bei der Garnreinigung bekannten Methoden zur Erkennung von als Einzelfehler störenden kurzen Dickstellen mit einer ausgeprägten starken Querschnittszunahme für den vorliegenden Fall nicht anwendbar.

Auch die bei modernen Garnreinigungsanlagen, wie beispielsweise beim Garnreinigungssystem USTER POLYMATIC, mögliche Ueberwachung des schon erwähnten Variationskoeffizienten der Masseschwankungen auf Abweichungen von einem Grenzwert vermag die gestellte Aufgabe nicht zu lösen, weil sich der Variationskoeffizient beim Auftreten von auf Verzugsfehler im Streckwerk zurückzuführenden kurzen Dickstellen für die Bedürfnisse eines robusten und sicheren Detektionsverfahren zu wenig stark und zu wenig ausgeprägt erhöht. Aehnliches gilt für die Erkennung der erwähnten Verzugsfehler mittels online Garnfehlerklassierung, über welche die Garnreinigungsanalge USTER POLYMATIC ebenfalls verfügt. Hier sind die zur Anwendung gelangenden Klassierschemata und die darauf basierenden Ueberwachungsprozeduren für ein zuverlässiges Detektionsverfahren zu wenig selektiv.

Nachfolgend wird die Erfindung anhand eines Ausführungsbeispiels und der Zeichnungen näher erläutert; es zeigt:
- Fig. 1: Diagramme des typischen Verlaufs von Garnsignalen zur Erläuterung des erfindungsgemässen Verfahrens,
- Fig. 2: ein Blockschema einer nach dem erfindungsgemässen Verfahren arbeitenden Garnreinigungsanlage; und
- Fig. 3: ein Blockschema eines Details von Fig. 2.

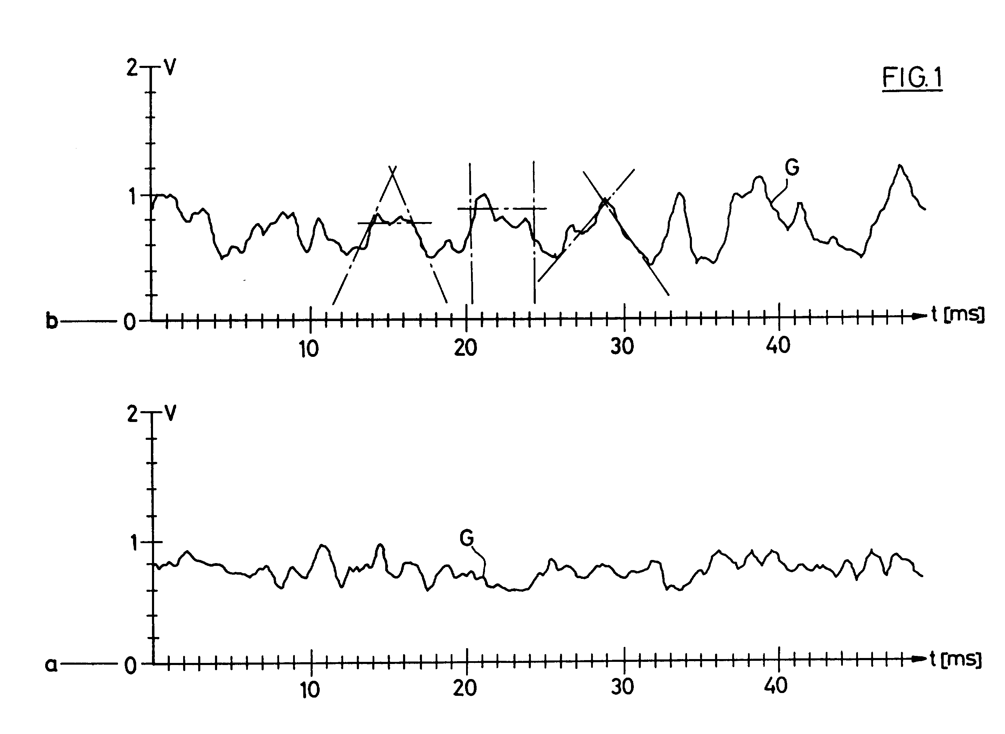

In Fig. 1 sind zwei typische Garnsignale G dargestellt, und zwar in Zeile a das Garnsignal G eines fehlerfreien und in Zeile b das Garnsignal G eines fehlerhaften Garns, wobei auf der Abszisse die Zeit t in Millisekunden und auf der Ordinate die skalierte Masse V des Garns aufgetragen ist.

Wie Zeile a zu entnehmen ist, zeichnen sich die natürlichen Querschnittsschwankungen eines fehlerfreien Ringgarns durch einen einem Rauschsignal ähnlichen stochastischen Verlauf aus. Die durch Verzugsfehler im Streckwerk verursachten kurzen Dickstellen des fehlerhaften Garns (Zeile b) unterscheiden sich im Amplitudenverlauf von den natürlichen Querschnittsschwankungen. Sie sind, wie in Zeile b strichpunktiert angedeutet, typisch dreieck-, trapez- bis rechteckförmig, weisen eine Fehlerlänge in der Grössenordnung von etwa zwei Stapellängen auf und sind auf eine Querschnittszunahme von typisch 50 bis 100% begrenzt.

Beim erfindungsgemässen Verfahren wird nun mittels einer diesem Signalverlauf angepassten Signalverarbeitung, mittels zeitverzugsloser nichtlinearer Bewertung, mittels linearer Filterung, mittels Schwellwertbildung und Auslösung von Triggerimpulsen sowie mittels Unterscheidung der Häufigkeit, mit der solche Triggerimpulse bei fehlerhaftem Garn in Vergleich zu einwandfreiem Garn auftreten, darauf geschlossen, ob das online überwachte Garn von einer Spinnstelle mit einwandfreiem oder von einer Spinnstelle mit korrektur- oder reparaturbedürftigem Streckwerk produziert wurde.

Ausserdem macht sich das erfindungsgemässe Verfahren die Tatsache zu Nutze, dass Textilmaschinen wie Ringspinn- oder Spulmaschinen in der Regel über eine Vielzahl identischer Produktionsstellen verfügen, von denen der Grossteil in der Regel Garn gleicher Qualität und Beschaffenheit produziert oder verarbeitet, so dass falsche Einstellungen oder Defekte von Streckwerken in der Regel gleichzeitig auf höchstens wenige Produktionsstellen beschränkt sind.

Für die Erkennung der genannten kurzen Dickstellen ist es wichtig, das dazu verwendete Verfahren unempfindlich auf spezifische Garneigenschaften des betrachteten Garns, oder mit anderen Worten, robust in bezug auf Schwankungen solcher Eigenschaften zu machen. Dies erfolgt dadurch, dass die genannten Schwellwerte, die von solchen spezifischen Garneigenschaften abhängig sind, automatisch an diese angepasst werden.

Zu diesem Zweck werden die entsprechenden spezifischen Garneigenschaften als Durchschnittswerte eines Kollektivs von Produktionsstellen ermittelt, auf denen Garn gleicher Qualität und Beschaffenheit produziert oder verarbeitet wird. Dabei wird davon ausgegangen, dass diese Durchschnittswerte auch dann noch repräsentativ sind, wenn auf einzelnen oder wenigen Produktionsstellen des betrachteten Kollektivs fehlerhaftes Garn von korrektur- oder reparaturbedürftigen Streckwerken produziert wird.

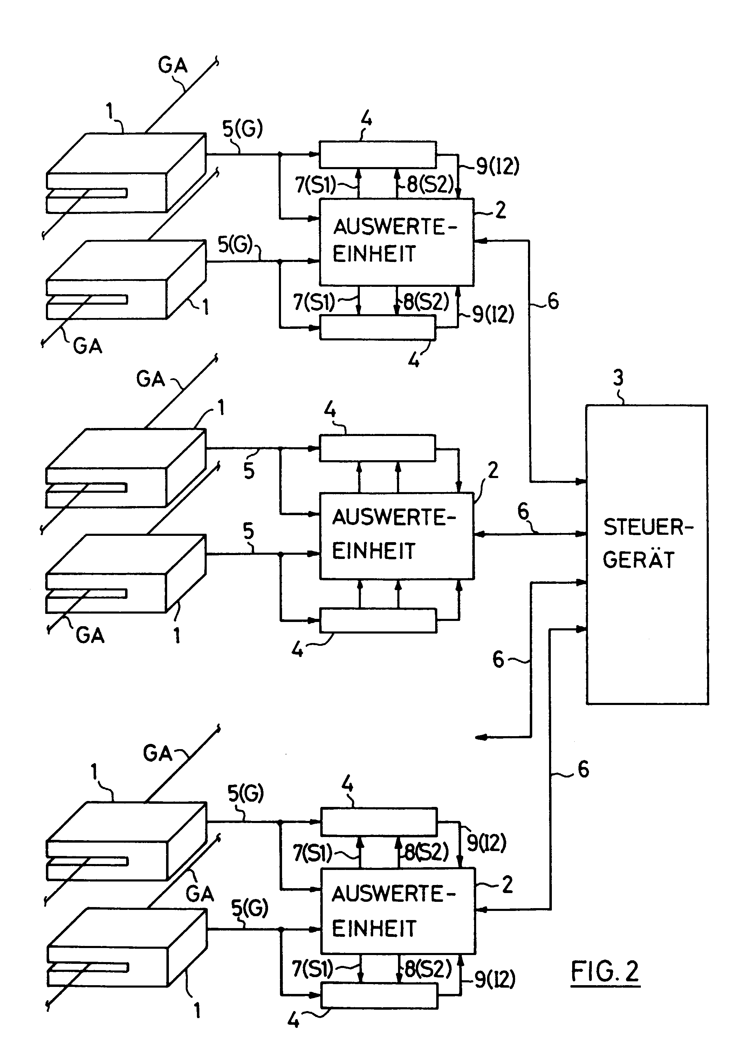

Gemäss Fig. 2 besteht die Vorrichtung zur Durchführung des erfindungsgemässen Verfahrens aus einer auf einer Textilmaschine mit vielen identischen Produktionsstellen angeordneten Garnreinigungsanlage, wie beispielsweise der Anlage USTER POLYMATIC, mit entsprechenden hard- und/oder softwaremässigen Erweiterungen. Die Anlage enthält an jeder Produktionsstelle einen Garnsensor 1 zur laufenden Messung des Querschnitts oder des Durchmessers des an dieser Produktionsstelle auf- oder umgespulten Garns GA, an die Garnsensoren 1 angeschlossene identische Auswerteeinheiten 2, wobei an jede Auswerteeinheit 2 mehrere Garnsensoren 1 angeschlossen sind, und ein gemeinsames, mit den Auswerteeinheiten 2 verbundenes Steuergerät 3. Ausserdem ist für jede Produktionsstelle eine der jeweiligen Auswerteeinheit 2 zugeordnete Zusatzeinrichtung 4 vorgesehen, in welcher die beschriebenen Verfahrensschritte, zeitverzugslose nichtlineare Bewertung, lineare Filterung, Schwellwertbildung und Auslösung von Triggerimpulsen durchgeführt werden.

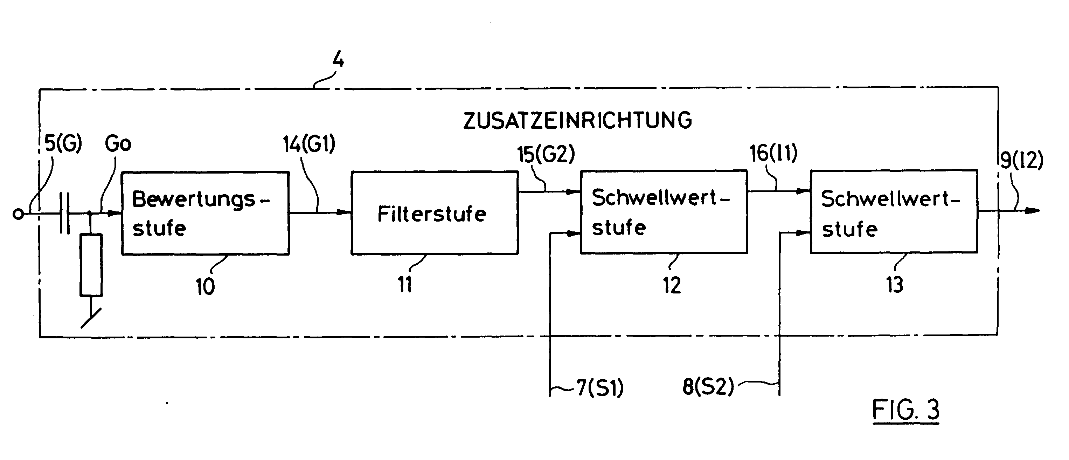

Jeder Garnsensor 1 ist über eine Leitung 5 mit dem entsprechenden Eingang sowohl der zugeordneten Zusatzeinrichtung 4 als auch seiner Auswerteeinheit 2 verbunden, welch letztere über eine Leitung 6 mit dem Steuergerät 3 verbunden ist. Von entsprechenden Ausgängen der Auswerteeinheit 2 führen zwei Steuerleitungen 7 und 8 zu den zugeordneten Zusatzeinrichtungen 4, deren Ausgang über eine Leitung 9 mit einem weiteren Eingang der zugeordneten Auswerteeinheit 2 verbunden ist. Die über die genannten Leitungen laufenden Signale sind in den Figuren 2 und 3 in Klammern angegeben: Auf den Leitungen 5 läuft das Garnsignal G, auf den Steuerleitungen 7 und 8 laufen Schwellwerte S1 bzw. S2 und auf den Leitungen 9 ein Signal I2.

Gemäss Fig. 3 besteht jede Zusatzeinrichtung 4 aus einer Bewertungsstufe 10, einer Filterstufe 11, einer ersten Schwellwertstufe 12, welcher der erste Schwellwert S1 zugeführt ist, und aus einer zweiten Schwellwertstufe 13, welcher der zweite Schwellwert S2 zugeführt ist und die das Signal I2 abgibt.

Am Eingang der Bewertungsstufe 10 liegt die Wechselspannungskomponente Go des analogen Garnsignals G. Die Momentanspannung dieses mit bekannten Methoden und Mitteln aufbereiteten Garnsignals Go ist annähernd proportional zur Abweichung des durch den Garnsensor 1 abgetasteten Garns GA von seinem Mittelwert. Die Bewertungsstufe 10 ist mit der Filterstufe 11 über eine Leitung 14 verbunden, über welche ein Signal G1 läuft, die Filterstufe 11 ist mit der ersten Schwellwertstufe 12 über eine Leitung 15 verbunden, über welche ein Signal G2 läuft, und die erste Schwellwertstufe 12 ist mit der zweiten Schwellwertstufe 13 über eine Leitung 16 verbunden, über die ein Signal I1 läuft.

Die Funktionen der Bewertungsstufe 10, der Filterstufe 11, der ersten und zweiten Schwellwertstufe 12 bzw. 13 können je nach technischen und/oder wirtschaftlichen Gründen einzeln oder gesamthaft in Hardware und/oder Software verwirklicht werden.

In der Bewertungsstufe 10 wird das Garnsignal Go zeitverzugslos einer nichtlinearen Bewertung unterzogen, und zwar so, dass momentane Abweichungen des Garnquerschnitts von seinem Mittelwert überproportional umso stärker bewertet werden, je grösser diese im Bereich der typisch zu erwartenden, durch Verzugsfehler verursachten Querschnittzunahmen oder -abnahmen sind.

Diese nichtlineare Bewertung erfolgt dadurch, dass die Werte des Garnsignals Go in der nichtlinearen Bewertungsstufe 10 unter Vernachlässigung des Vorzeichens in die dritte oder vierte Potenz erhoben oder nach einer anderen, ähnlich stark progressiv verlaufenden Gesetzmässigkeit bewertet werden, solange sich das Signal im Amplitudenbereich der typisch zu erwartenden, durch Verzugsfehler verursachten Querschnittsänderungen bewegt. Die Beschränkung auf den genannten Amplitudenbereich wird dadurch erreicht, dass vom Garnsignal Go in der nichtlinearen Bewertungsstufe 10 diejenigen Werte, die unter Vernachlässigung des Vorzeichens grösser sind als ein Wert von etwa 100 bis 120%, so bewertet werden, als wenn sie diesem genannten Wert entsprächen. Dies ist technisch identisch mit einer Begrenzung des Garnsignals Go auf einen Wert von 100 bis 120% des Mittelwerts. Das auf der Leitung 14 zur Filterstufe 11 laufende Signal G1 ist also das sich aus der nichtlinearen Bewertung des Garnsignals Go ergebende Signal.

Das Signal G1 wird nun in der Filterstufe 11 durch eine gleitende Mittelwertbildung über eine feste oder wahlweise einstellbare Bezugslänge von der Grösse von etwa 1 bis 2 Stapellängen geglättet, woraus ein Signal G2 entsteht. Durch die beiden Transformationen, nichtlineare Bewertung in der Bewertungsstufe 10 und lineare Filterung in der Filterstufe 11, wird erreicht, dass im Signal G2 der durch die zu erfassenden Verzugsfehler bedingte Signalverlauf amplitudenmässig stärker betont ist als der durch die spontanen, natürlichen Schwankungen des Garnquerschnitts bedingte Verlauf. Denn die natürlichen Schwankungen werden aufgrund der Häufigkeitsverteilung der Abtastwerte schwächer bewertet als die durch Verzugsfehler verursachten Querschnittszu- oder -abnahmen.

In der ersten Schwellwertstufe 12 werden die Werte des Signals G2 unter Vernachlässigung ihres Vorzeichens laufend mit einem von der Auswerteeinheit 2 gelieferten ersten Schwellwert S1 verglichen. Jedesmal, wenn der absolute Momentanwert von G2 grösser ist als der positive erste Schwellwert S1, wird von der ersten Schwellwertstufe 12 über die Leitung 16 ein Impuls I1 abgegeben.

Da sich die gesuchten, nur schwach ausgeprägten, kurzen Dickstellen nicht stark von den natürlichen Schwankungen des ringgesponnenen Garns unterscheiden, wird die erste Schwellwertstufe 12 in gewissen Fällen spontan ansprechen und Impulse I1 abgeben, bei denen kein Streckwerkfehler als Ursache vorliegt. Bezogen auf die überwachte Garnlänge ist die Häufigkeit eines solchen spontanen Auftretens von Impulsen I1 von der Höhe des ersten Schwellwerts S1 abhängig. Je höher dieser ist, umso seltener wird die erste Schwellwertstufe 12 ansprechen. Die praktische Erprobung hat gezeigt, dass es sehr schwierig und praktisch ausgeschlossen ist, den Schwellwert S1 so einzustellen, dass einerseits alle durch Verzugsstörungen verursachten Dickstellen erkannt, und andererseits keine spontanen Impulse I1 ausgelöst werden. Diese Aufgabe der sicheren Erkennung der gesuchten Dickstellen im Signal G2 wird durch die zweite Schwellwertstufe 13 gelöst, die die Häufigkeit des Auftretens der Impulse I1 anhand eines zweiten Schwellwerts S2 überwacht.

Wenn der erste Schwellwert S1 so eingestellt ist, dass die gesuchten Dickstellen sicher einen Impuls I1 auslösen, dann wird es auch zu dem nicht durch kurze Dickstellen verursachten spontanen Auftreten von Impulsen I1 kommen. Sobald aber auf Verzugsstörungen zurückzuführende Dickstellen auftreten, wird jedenfalls, im Vergleich zum spontanen Auftreten, die Häufigkeit der Impulse I1 zunehmen. Dabei ist diese relative Zunahme einerseits von der Höhe des ersten Schwellwerts S1 abhängig und andererseits von der Intensität der Verzugsstörung, wobei der optimale Wert des ersten Schwellwerts S1 kritisch ist und am besten aufgrund praktischer Versuche eingestellt wird.

Bei einem festen ersten Schwellwert S1 ist die Häufigkeit des Auftretens von Impulsen I1 von spezifischen Eigenschaften des überwachten Garns, insbesondere von dessen Unregelmässigkeiten, abhängig; und diese Unregelmässigkeiten zeigen sich bei der Garnreinigungen in Schwankungen des Massenvariationskoeffizienten, also in den CV%-Werten. Und diese Werte wiederum werden in den Auswerteeinheiten 2 (Fig. 2) ermittelt, die ihrerseits mit den Zusatzeinrichtungen 4 verbunden sind. Um nun das Verfahren zur Detektion der durch Verzugsstörungen verursachten kurzen Dickstellen von den erwähnten Unregelmässigkeiten unabhängig zu machen, wird die Höhe des ersten Schwellwerts S1 von den spezifischen CV%-Werten der Ungleichmässigkeit des überwachten Garns abhängig gemacht.

Da in einer ordnungsgemäss betriebenen Spinnerei davon ausgegangen werden kann, dass gleichzeitig höchstens ganz wenige Streckwerke einer Ringspinnmaschine fehlerhaft eingestellt oder defekt sind, wird die Grösse des ersten Schwellwerts S1 vom durchschnittlichen CV%-Wert der Garnungleichmässigkeit des Kollektivs aller derjenigen Ueberwachungseinrichtungen abhängig gemacht, die gleichzeitig Garn derselben Qualität nach identischen Kriterien überwachen. Zu diesem Zweck wird in der zweiten Schwellwertstufe 13 die Rate des Auftretens von Impulsen I1 pro Längeneinheit des überwachten Garns mit dem zweiten Schwellwert S2 verglichen, welcher von den Auswerteeinheiten 2 anhand des in diesen ermittelten durchschnittlichen CV%- Wertes gesteuert ist. Sobald diese Rate einen durch den zweiten Schwellwert S2 festgelegten kritischen Wert überschreitet, wird von der zweiten Schwellwertstufe 13 ein Impuls I2 abgegeben, der das Auftreten von zu detektierenden Verzugsstörungen signalisiert.

Die Rate der tolerierbaren spontanen Impulse I1 und folglich der optimale Wert von S2 ist seinerseits abhängig von spezifischen Eigenschaften des überwachten Garns. Um das beschriebene Verfahren möglichst robust und damit von solchen spezifischen Eigenschaften unabhängig zu machen, wird der Wert von S2 vorzugsweise von der Rate abhängig gemacht, mit der bei ordnungsgemäss eingestellten Streckwerken die Impulse I1 spontan auftreten. Diese Rate wiederum liefern die Auswerteeinheiten 2 anhand der durchschnittlichen Rate des Kollektivs aller derjenigen Ueberwachungseinrichtungen, die gleichzeitig Garn der selben Qualität nach identischen Kriterien überwachen.

Figur 2 zeigt anschaulich, dass bei der vorliegenden Erfindung im wesentlichen die normalerweise auf einer Spulmaschine ohnehin angeordnete Garnreinigungsanlage durch Zusatzeinrichtungen 4 erweitert wird. Dabei dient die Garnreinigungsanlage als Plattform für die hard- und softwaremässige Umsetzung des beschriebenen Verfahrens und bildet Teil der Anlage zur Durchführung dieses Verfahrens.

## Patentansprüche

1. Verfahren zur online Erkennung von schlecht eingestellten oder defekten Streckwerken an Ringspinnmaschinen durch Analyse eines durch Abtastung des gesponnenen Garns gewonnenen und zu dessen Querschnitt oder Durchmesser proportionalen Garnsignals, wobei die genannte Analyse auf die Grösse der von einem Mittelwert abweichenden Amplituden des Garnsignals (Go) und auf die Häufigkeit des Auftretens derartiger Amplitudenwerte hin erfolgt, wobei diese Amplitudenwerte unter Vernachlässigung ihres Vorzeichens einer nichtlinearen Gewichtung unterworfen werden, dadurch gekennzeichnet, dass das gewichtete Garnsignal (G1) über eine bestimmte Bezugslänge geglättet und das geglättete Garnsignal (G2) mit einem ersten Schwellwert (S1) verglichen und bei Ueberschreiten dieses Schwellwertes (S1) ein erster Impuls (I1) ausgelöst wird und dass die Häufigkeit des Auftretens der ersten Impulse mit einem zweiten Schwellwert (S2) verglichen und bei Ueberschreiten dieses Schwellwertes ein zweiter Impuls (I2) ausgelöst wird, welcher als Anzeige für das Auftreten einer Verzugsstörung der zu erkennenden Art bewertet wird.

2. Verfahren nach Anspruch 1, dadurch gekennzeichnet, dass die genannten Amplitudenwerte in die dritte oder vierte Potenz erhoben werden.

3. Verfahren nach Anspruch 1, dadurch gekennzeichnet, dass bei denjenigen der genannten Amplitudenwerte, bei denen die Abweichung vom Mittelwert grösser ist als ein bestimmter Wert des Mittelwertes, die Abweichung so bewertet wird, als ob sie diesem Wert entsprechen würde.

4. Verfahren nach Anspruch 1, dadurch gekennzeichnet, dass der erste Schwellwert (S1) anhand von Qualitäts- und/oder Beschaffenheitsmerkmalen des überwachten Garns (GA), insbesondere anhand des Massenvariationskoeffizienten festgelegt wird, wobei für diese Festlegung vorzugsweise der durchschnittliche Massenvariationskoeffizient eines Kollektivs von Ueberwachungsstellen (1) mit Garn von gleicher Qualität und Beschaffenheit verwendet wird.

5. Verfahren nach Anspruch 1, dadurch gekennzeichnet, dass der zweite Schwellwert (S2) anhand von Qualitäts- und/oder Beschaffenheitsmerkmalen des überwachten Garns (GA), insbesondere anhand der Häufigkeit des Auftretens von ersten Impulsen (I1) bei fehlerfreiem Garn festgelegt wird, wobei für diese Festlegung vorzugsweise die durchschnittliche Häufigkeit des Auftretens derartiger Impulse bei einem Kollektiv von Ueberwachungsstellen (1) mit Garn von gleicher Qualität und Beschaffenheit verwendet wird.

6. Vorrichtung zur Durchführung des Verfahrens nach Anspruch 1, mit einem von dem zu untersuchenden Garn durchlaufenen Messkopf (1) zur Messung des Garnquerschnittes oder -durchmessers und zur Umwandlung der Messwerte in ein elektrisches Garnsignal, und mit einer Auswerteeinheit (2) zu dessen Verarbeitung, wobei die Auswerteeinheit erste Mittel (10, 11) zur Bestimmung der momentanen Abweichung des Garnsignals (Go) von einem Mittelwert und zu deren Gewichtung, sowie zweite Mittel (12, 13) zur Bestimmung der Häufigkeit des Auftretens von derartigen Abweichungen enthält, wobei die ersten Mittel durch eine nichtlineare Bewertungsstufe (10) gebildet sind, dadurch gekennzeichnet, dass die ersten Mittel eine an die nichtlineare Bewertungsstufe anschliessende lineare Filterstufe (11) zum Glätten des bewerteten Garnsignals aufweisen, dass die zweiten Mittel eine erste Schwellwertstufe (12) umfassen, in welcher ein Vergleich des geglätteten Garnsignals (G2) mit einem von der Auswerteeinheit (2) zugeführten ersten Schwellwert (S1) erfolgt und bei Ueberschreiten dieses Schwellwertes ein erster Impuls (I1) ausgelöst wird und dass die zweiten Mittel eine an die erste Schwellwertstufe (12) angeschlossene zweite Schwellwertstufe (13) umfassen, in welcher ein Vergleich der Häufigkeit des Auftretens der ersten Impulse (I1) mit einem von der Auswerteeinheit (2) zugeführten zweiten Schwellwert (S2) erfolgt und bei Ueberschreiten dieses zweiten Schwellwertes ein, das Auftreten einer Verzugsstörung anzeigender, Impuls (I2) ausgelöst wird.

7. Vorrichtung nach Anspruch 6, mit einer Mehrzahl von Messköpfen, von denen jeweils eine bestimmte Anzahl an eine gemeinsame Auswerteeinheit angeschlossen ist, dadurch gekennzeichnet, dass die genannten ersten und zweiten Mittel (10 bzw. 12, 13) jeweils Bestandteil einer Zusatzeinrichtung (4) der Auswerteeinheiten (2) bilden, dass für jeden Messkopf (1) eine derartige Zusatzeinrichtung vorgesehen ist, und dass die Zusatzeinrichtungen aller an eine gemeinsame Auswerteeinheit angeschlossenen Messköpfe dieser gemeinsamen Auswerteeinheit zugeordnet sind.

8. Vorrichtung nach Anspruch 6, dadurch gekennzeichnet, dass in der Bewertungsstufe (10) die momentanen Abweichungen des Garnsignals (Go) von einem Mittelwert stark progressiv bewertet werden und eine Begrenzung des Garnsignals auf einen Wert von 100 - 120% des Mittelwerts erfolgt und dass die Filterstufe zum Glätten des nichtlinear bewerteten Garnsignals (G1) durch gleitende Mittelwertbildung über eine vorgebbare Bezugslänge ausgebildet ist.

9. Vorrichtung nach Anspruch 6, dadurch gekennzeichnet, dass der erste Schwellwert (S1) anhand des Massenvariationskoeffizienten des überwachten Garns (GA) festgelegt ist, wobei diese Festlegung anhand eines Kollektivs von Messköpfen (1) mit Garn (GA) von gleicher Qualität und Beschaffenheit erfolgt, welches Kollektiv aus der Menge der betreffenden, an eine gemeinsame Auswerteeinheit (2) angeschlossenen Messköpfe oder aus der Menge aller Messköpfe an der jeweiligen Maschine gewonnen ist, wobei im letzteren Fall die Festlegung des ersten Schwellwerts über ein gemeinsames, mit allen Auswerteeinheiten verbundenes Steuergerät (3) erfolgt.

10. Vorrichtung nach Anspruch 6, dadurch gekennzeichnet, dass der zweite Schwellwert (S2) anhand der Häufigkeit des Auftretens von ersten Impulsen (I1) bei fehlerfreiem Garn festgelegt ist, wobei diese Festlegung anhand eines Kollektivs von Messköpfen (1) mit Garn (GA) von gleicher Qualität und Beschaffenheit erfolgt, welches Kollektiv aus der Menge der betreffenden, an eine gemeinsame Auswerteeinheit (2) angeschlossenen Messköpfe oder aus der Menge aller Messköpfe an der jeweiligen Maschine gewonnen ist, wobei im letzteren Fall die Festlegung des zweiten Schwellwerts über ein gemeinsames, mit allen Auswerteeinheiten verbundenes Steuergerät (3) erfolgt.

## Claims

1. Process for the on-line detection of badly adjusted or defective stretching mechanisms on ring spinning machines by analysis of a yarn signal which is obtained by scanning the spun yarn and is proportional to its cross-section or diameter, wherein the said analysis takes place in response to the size of that amplitude of the yarn signal (Go) which deviates from a mean value and in response to the frequency of occurrence of such amplitude values, and wherein these amplitude values are subjected, while disregarding their sign, to non-linear weighting, characterised in that the weighted yarn signal (G1) is smoothed over a certain reference length and the smoothed yarn signal (G2) is compared with a first threshold value (S1) and a first pulse (I1) is released when this threshold value (S1) is exceeded, and that the frequency of occurrence of the first pulse is compared with a second threshold value (S2) and, when this threshold value is exceeded, a second pulse (I2) is released which is rated as an indication of the occurrence of a draft fault of the type to be detected.

2. Process according to claim 1, characterised in that the said amplitude values are raised to the third or fourth power.

3. Process according to claim 1, characterised in that, in the case of those of the said amplitude values in which the deviation from the mean value is greater than a certain value of the mean value, the deviation is rated as if it were to correspond to this value.

4. Process according to claim 1, characterised in that the first threshold value (S1) is defined with the aid of features, in terms of quality and/or kind, of the yarn (GA) controlled, in particular with the aid of coefficients of mass variation, while use is preferably made, for this defining operation, of the average coefficient of mass variation of a collective of control points (1) with yarn of the same quality and kind.

5. Process according to claim 1, characterised in that the second threshold value (S2) is defined with the aid of features, in terms of quality and/or kind, of the yarn (GA) controlled, in particular with the aid of the frequency of occurrence of first pulses (I1) in nondefective yarn, while use is preferably made, for this defining operation, of the average frequency of occurrence of such pulses in a collective of control points (1) with yarn of the same quality and kind.

6. Device for carrying out the process according to claim 1, having a measuring head (1), through which the yarn to be investigated runs, for measuring the cross-section or diameter of the yarn and for converting the measurement values into an electrical yarn signal, and having an evaluating unit (2) for processing the same, wherein the evaluating unit contains first means (10, 11) for determining the momentary deviation of the yarn signal (Go) from a mean value and for weighting the same, and also second means (12, 13) for determining the frequency of occurrence of such deviations, and wherein the first means are formed by a non-linear rating stage (10), characterised in that the first means have a linear filtering stage (11), which follows the non-linear rating stage, for smoothing the rated yarn signal, that the second means comprise a first threshold value stage (12) in which a comparison of the smoothed yarn signal (G2) with a first threshold value (S1) supplied by the evaluating unit (2) takes place and, when this threshold value is exceeded, a first pulse (I1) is released, and that the second means comprise a second threshold value stage (13) which is connected to the first threshold value stage (12) and in which a comparison of the frequency of occurrence of the first pulse (I1) with a second threshold value (S2) supplied by the evaluating unit (2) takes place and, when this second threshold value is exceeded, a pulse (I2) which indicates the occurrence of a draft fault is released.

7. Device according to claim 6, having a plurality of measuring heads, of which a certain number, in each case, is connected to a common evaluating unit, characterised in that the said first and second means (10 and 12, 13 respectively) form, in each case, a component part of a supplementary arrangement (4) of the evaluating units (2), that such a supplementary arrangement is provided for each measuring head (1), and that the supplementary arrangements of all the measuring heads connected to a common evaluating unit are associated with this common evaluating unit.

8. Device according to claim 6, characterised in that, in the rating stage (10), the momentary deviations of the yarn signal (Go) from a mean value are rated in a strongly progressive manner and limitation of the yarn signal to a value of 100 - 120% of the mean value takes place, and that the filtering stage for smoothing the non-linearly rated yarn signal (G1) is constructed by sliding mean value formation over a predeterminable reference length.

9. Device according to claim 6, characterised in that the first threshold value (S1) is defined with the aid of the coefficient of mass variation of the yarn (GA) controlled, while this defining operation takes place with the aid of a collective of measuring heads (1) with yarn (GA) of the same quality and kind, which collective is obtained from the quantity of relevant measuring heads connected to a common evaluating unit (2) or from the quantity of all the measuring heads on the machine in question, while in the latter case, the defining of the first threshold value takes place via a common control apparatus (3) connected to all the evaluating units.

10. Device according to claim 6, characterised in that the second threshold value (S2) is defined with the aid of the frequency of occurrence of first pulses (I1) in nondefective yarn, while this defining operation takes place with the aid of a collective of measuring heads (1) with yarn (GA) of the same quality and kind, which collective is obtained from the quantity of relevant measuring heads connected to a common evaluating unit (2) or from the quantity of all the measuring heads on the machine in question, while in the latter case, the defining of the second threshold value takes place via a common control apparatus (3) connected to all the evaluating units.

## Revendications

1. Procédé pour l'identification en direct de bancs d'étirage mal ajustés ou défectueux de métiers à filer à anneaux, par analyse d'un signal de fil, obtenu par exploration du fil filé et proportionnel à sa section transversale ou à son diamètre, l'analyse citée étant effectuée pour connaître l'ampleur des amplitudes, s'écartant vis-à-vis d'une valeur moyenne, du signal de fil (Go) et la fréquence de la survenance de telles valeurs d'amplitudes, ces valeurs d'amplitudes étant soumises à une pondération non linéaire, en négligeant leur signe, caractérisé en ce que le signal de fil (G1) pondéré est lissé sur une longueur de référence déterminée et le signal de fil lissé (G2) est comparé à une première valeur de seuil (S1), et, en cas de dépassement de cette valeur de seuil (S1), une première impulsion (I1) est déclenchée, et en ce que la fréquence de la survenance des premières impulsions est comparée à une deuxième valeur de seuil (S2), et, en cas de dépassement de cette valeur de seuil, une deuxième impulsion (I2) est déclenchée, qui est utilisée comme indication de la survenance d'une perturbation de l'étirage du type à identifier.

2. Procédé selon la revendication 1, caractérisé en ce que les valeurs d'amplitudes citées sont élevées à la puissance 3 ou la puissance 4.

3. Procédé selon la revendication 1, caractérisé en ce que pour celles des valeurs d'amplitudes citées pour lesquelles l'écart vis-à-vis de la valeur moyenne est supérieur à une valeur déterminée de la valeur moyenne, l'écart est évalué comme s'il correspondait à cette valeur.

4. Procédé selon la revendication 1, caractérisé en ce que la première valeur de seuil (S1) est fixée à l'aide de caractéristiques de qualité et/ou d'état de surface du fil (GA) contrôlé, en particulier à l'aide du coefficient de variation de masse, le coefficient de variation de masse moyen d'un ensemble de points de surveillance (1), concernant un fil ayant la même qualité et le même état de surface, étant de préférence utilisé pour faire cette détermination.

5. Procédé selon la revendication 1, caractérisé en ce que la deuxième valeur de seuil (S2) est fixée à l'aide des caractéristiques de qualité et/ou d'état de surface du fil contrôlé (GA), en particulier à l'aide de la fréquence de la survenance des premières impulsions (I1) dans le cas d'un fil exempt de défaut, la fréquence moyenne de la survenance de telles impulsions, pour un ensemble de points de surveillance (1) avec un fil de même qualité et de même état de surface, étant utilisée de préférence pour cette détermination.

6. Dispositif de mise en oeuvre du procédé selon la revendication 1, avec une tête de mesure (1) sur laquelle passe le fil à contrôler et destinée à effectuer la mesure de la section transversale ou du diamètre du fil et la conversion des valeurs de mesure en un signal de fil de nature électrique, et avec une unité d'évaluation (2) destinée à sa transformation, l'unité d'évaluation contenant des premiers moyens (10, 11) destinés à déterminer l'écart momentané du signal de fil (Go) vis-à-vis d'une valeur moyenne et vis-à-vis de sa pondération, ainsi que des deuxièmes moyens (12, 13) destinés à la détermination de la fréquence de la survenance de tels écarts, les premiers moyens étant constitués par un étage d'évaluation non-linéaire (10), caractérisé en ce que les premiers moyens présentent un étage de filtrage linéaire (11) raccordé à l'étage d'évaluation non-linéaire, pour assurer le lissage du signal de fil évalué, en ce que les deuxièmes moyens comprennent un premier étage de valeur de seuil (12), dans lequel est effectuée une comparaison entre le signal de fil lissé (G2) et une première valeur de seuil (S1) amenée par l'unité d'évaluation (2) et, en cas de descente au-dessous de cette valeur de seuil, une première impulsion (I1) est déclenchée, et en ce que les deuxièmes moyens comprennent un deuxième étage de valeur de seuil (13), raccordé au premier étage de valeur de seuil (12) et dans lequel est effectuée une comparaison entre la fréquence de la survenance des premières impulsions (I1) et une deuxième valeur de seuil (S2) amenée par l'unité d'évaluation (2), et une impulsion (12), indiquant la survenance d'une perturbation de l'étirement, est déclenchée en cas de dépassement de cette deuxième valeur de seuil.

7. Dispositif selon la revendication 6, avec une pluralité de têtes de mesure dont respectivement un nombre déterminé est raccordé à une unité d'évaluation commune, caractérisé en ce que les premiers et deuxièmes moyens (10, respectivement 12, 13) cités font partie chacun d'un dispositif additionnel (4) des unités d'évaluation (2), en ce que, pour chaque tête de mesure (1), est prévu un dispositif additionnel de ce type, et en ce que les dispositifs additionnels de toutes les têtes de mesure raccordées à une unité d'évaluation commune sont associés à cette unité d'évaluation commune.

8. Dispositif selon la revendication 6, caractérisé en ce que, dans l'étage d'évaluation (10), les écarts momentanés du signal de fil (Go), vis-à-vis d'une valeur moyenne, sont évalués de façon fortement progressive et une limitation du signal de fil à une valeur de 100 à 120 % de la valeur moyenne est effectuée, et en ce que l'étage de filtration, destiné au lissage du signal de fil (G1) évalué de façon non-linéaire, est constitué par la formation d'une valeur moyenne glissante sur une longueur de référence pouvant être prédéterminée.

9. Dispositif selon la revendication 6, caractérisé en ce que la première valeur de seuil (S1) est fixée à l'aide du coefficient de variation de masse du fil (GA) contrôlé, cette détermination s'effectuant à l'aide d'un ensemble de têtes de mesure (1) avec un fil (GA) de même qualité et de même état de surface, cet ensemble étant issu de la quantité de têtes de mesure conservées, raccordées à une unité d'évaluation (2) commune, ou de la quantité de toutes les têtes de mesure raccordées à la machine respective, dans le dernier cas, la détermination de la première valeur de seuil s'effectuant par l'intermédiaire d'un appareil de commande (3) commun, relié à toutes les unités d'évaluation.

10. Dispositif selon la revendication 6, caractérisé en ce que la deuxième valeur de seuil (S2) est fixée à l'aide de la fréquence de la survenance des premières impulsions (I1) dans le cas où le fil est exempt de défaut, cette détermination s'effectuant à l'aide d'un ensemble de têtes de mesure (1) avec un fil (GA) de même qualité et de même état de surface, cet ensemble étant issu de la quantité de têtes de mesure concernées, raccordées à une unité d'évaluation (2) commune ou issu de la quantité de toutes les têtes de mesure se trouvant sur la machine respective, dans ce dernier cas, la détermination de la deuxième valeur de seuil s'effectuant par l'intermédiaire d'un appareil de commande (3) commun, relié à toutes les unités d'évaluation.
